# EUROPEAN PATENT APPLICATION

(11) **EP 1 569 096 A1**
(43) Date of publication of application: **31.08.2005**
(21) Application number: 04251158.4
(22) Date of filing: 27.02.2004
(51) Int. Cl.: G06F 9/44

(54) **System and method for executing wireless applications using common UI components from a UI repository**

(71) Applicant: Research In Motion Limited, Ontario N2L 3W8 (CA)
(72) Inventor: Vitanov, Kamen, Toronto Ontario M6P 2P4 (CA); Shenfield, Michael, Richmond Hill Ontario L4C 3S9 (CA); Fritsch, Brindusa L., Toronto Ontario M9C 2J9 (CA)
(74) Representative: Rickard, David John

(57) **Abstract**

A system and method is provided having an execution environment of an intelligent runtime device framework for generating user interface elements on a user interface (UI), declared on the device. The proposed method allows user interface definitions through XML metadata UI definitions (or other structured definition language schema) instead of requiring an implementation of the screen elements in executable code for the application. The UI definitions are stored in a common UI repository as a common resource of the applications on the device and is processed at runtime. The UI definitions are independent from the target platform of the device. The "look and feel" of all the applications on the device can be customized and branded as required. Defining layout and ordering of UI elements separately from the applications logic offers modularization of the applications. Such modularization allows reuse of already defined UI screens and sharing them between different applications. The system has a themes and branding repository, a UI repository, a visualization engine, an execution environment, and a UI service. The method includes steps of parsing the XML definitions, applying theme and branding characteristics, providing a screen model to the execution environment, visualizing the user interface, and event handling.

## Description

### BACKGROUND OF THE INVENTION

This application relates generally to presentation of applications on a user interface of a wireless device.

There is a continually increasing number of wireless devices in use today, such as mobile telephones, PDAs with wireless communication capabilities, and two-way pagers. Software applications which run on these devices increase their utility. For example, a mobile phone may include an application which retrieves the weather for a range of cities, or a PDA may include an application that allows a user to shop for groceries. These software applications take advantage of the connectivity to a network in order to provide timely and useful services to users. However, due to the restricted resources of some devices, and the complexity of delivering large amounts of data to the devices, developing software applications for a variety of devices remains a difficult and time-consuming task.

Currently, devices are configured to communicate with Web Services through Internet based Browsers and/or native applications. Native applications have the advantage of being developed specifically for the type of device platform, thereby providing a relatively optimized application program for each runtime environment. However, native applications have disadvantages of not being platform independent, thereby necessitating the development multiple versions of the same application, as well as being relatively large in size, thereby taxing the memory resources of the device. Further, application developers need experience with programming languages such as Java and C++ to construct these hard coded native applications. There is a need for application programs that can be run on client devices having a wide variety of runtime environments, as well as having a reduced consumption of device resources.

It is desirable to provide the maximum degree of flexibility and efficiency in defining component screens of an application that manage the application presentation on the device, such as wireless, using a dynamic and interactive user interface (UI). Due to limitations of wireless device resources, it is important to have a method for efficient application data representation that uses reduced executable code.

The systems and methods disclosed herein provide an execution environment for generating user interface elements to obviate or mitigate at least some of the above presented disadvantages.

### SUMMARY OF THE INVENTION

It is desirable to provide the maximum degree of flexibility and efficiency in defining component screens of a wireless application that manage the application presentation on a device, using a dynamic and interactive user interface (UI). Due to limitations of wireless device resources, it is important to have a method for efficient application data representation that uses reduced executable code. Contrary to present user interface visualization systems and methods, a system and method is provided having an execution environment of an intelligent runtime device framework for generating user interface elements on a user interface (UI), declared on the device. The proposed method allows user interface definitions through XML metadata UI definitions (or other structured definition language schema) instead of requiring an implementation of the screen elements in executable code for the application. The UI definitions are stored in a common UI repository as a common resource of the applications on the device and is processed at runtime. The UI definitions are independent from the target platform of the device. The "look and feel" of all the applications on the device can be customized and branded as required. Defining layout and ordering of UI elements separately from the applications logic offers modularization of the applications. Such modularization allows reuse of already defined UI screens and sharing them between different applications. The system has a themes and branding repository, a UI repository, a visualization engine, an excution environment, and a UI service. The method includes steps of parsing the XML definitions, applying theme and branding characteristics, providing a screen model to the execution environment, visualizing the user interface, and event handling.

According to the present invention there is provided a method for generating a screen representation for display on a user interface (UI) of a device, the screen representation defined as a set of UI definitions expressed in a structured definition language configured for referencing by a plurality of applications when provisioned on the device, the method comprising the steps of: requesting the screen representation by a first application of the plurality of applications; retrieving from a memory the set of UI definitions corresponding to the screen representation; parsing the structured definition language of the UI definitions to determine functional characteristics of the screen representation; applying appearance characteristics to the functional characteristics to generate a screen model defining the screen representation; and populating the screen model with current user interface conditions to generate the screen representation; wherein the screen representation is configured for subsequent display to the user interface for interaction with a user via user events.

According to a further aspect of the present invention there is provided a system for providing an execution environment of a device to generate a screen representation for display on a user interface (UI) of the device, the screen representation defined as a set of UI definitions expressed in a structured definition language configured for referencing by a plurality of applications when provisioned on the device, the system comprising: a memory for storing a number of the UI definition sets for reference by the plurality of applications; a visualization engine for accepting a screen representation request by a first application of the plurality of applications, and for parsing the structured definition language of a selected set of the UI definitions retrieved from memory to determine functional characteristics of the screen representation, the selected UI definitions corresponding to the requested screen representation; a screen module coupled the visualization engine for applying appearance characteristics to the functional characteristics to generate a screen model defining the screen representation; and a user interface service for rendering the screen model to provide the screen representation to the user interface; wherein a user of the device interacts with the screen representation on the user interface.

According to a further aspect of the present invention there is provided a computer program product for generating a screen representation for display on a user interface (UI) of a device, the screen representation defined as a set of UI definitions expressed in a structured definition language configured for referencing by a plurality of applications when provisioned on the device, the computer program product comprising: a computer readable medium; a memory module stored on the computer readable medium for storing a number of the UI definition sets for reference by the plurality of applications; a visualization engine stored on the computer readable medium for accepting a screen representation request by a first application of the plurality of applications, and for parsing the structured definition language of a selected set of the UI definitions retrieved from memory to determine functional characteristics of the screen representation, the selected UI definitions corresponding to the requested screen representation; a screen module coupled the visualization engine module for applying appearance characteristics to the functional characteristics to generate a screen model defining the screen representation; and a rendering module stored on the computer readable medium for rendering the screen model to provide the screen representation to the user interface; wherein a user of the device interacts with the screen representation on the user interface.

### BRIEF DESCRIPTION OF THE DRAWINGS

These and other features will become more apparent in the following detailed description in which reference is made to the appended drawings by way of example only, wherein:
Figure 1 is a block diagram of a network system;
Figure 2 is a block diagram of a generic device of Figure 1;
Figure 3 is shows various applications interacting with a UI repository of the device of Figure 2;
Figure 4 is a system for visualization of UI definitions on a user interface of Figure 2;
Figure 5 shows a UI Definitions Hierarchy for the UI depository of Figure 4; and
Figure 6 is a flowchart of an example operation of the system of Figure 4.

### DESCRIPTION OF THE PREFERRED EMBODIMENTS

### Network System

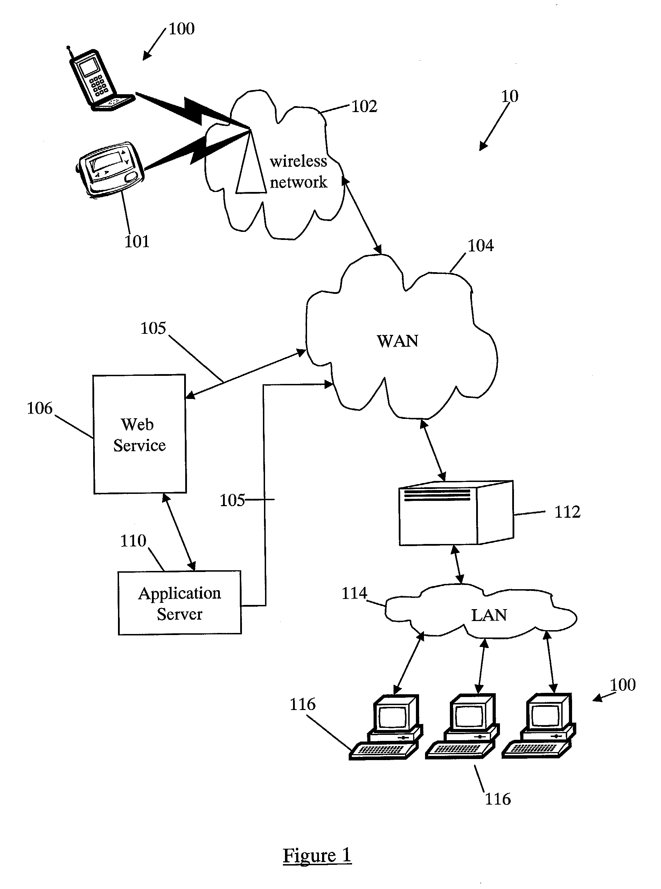

Referring to Figure 1, a network system 10 comprises a plurality of generic terminal devices 100 for interacting, for example, with one or more web services 106, via a coupled Wide Area Network (WAN) 104 such as but not limited to the Internet. These generic terminal devices 100 can be such as but not limited to personal computers 116, wireless devices 101, PDAs, self-service kiosks and the like. The services provided by the web service 106 can be other services such as but not limited to SQL Databases, IDL-based CORBA and RMI/IIOP systems, Legacy Databases, J2EE, SAP RFCs, and COM/DCOM components. Further, the system 10 can also have a gateway server 112 for connecting the desktop terminals 116 via a Local Area Network (LAN) 114 to the service 106. Further, the system 10 can also have a wireless network 102 for connecting the wireless devices 101 to the WAN 104. It is recognized that other devices and computers (not shown) could be connected to the web service 106 via the WAN 104 and associated networks other than as shown in Figure 1. The generic terminal devices 100, wireless devices 101 and personal computers 116 are hereafter referred to as the devices 100 for the sake of simplicity. Web services 106 are selected for the following description of the system 10, for the sake of simplicity. However, it is recognized that other generic services could be substituted for the web services 106, if desired. Further, the networks 102, 104, 112 of the system 10 will hereafter be referred to as the network 104, for the sake of simplicity.

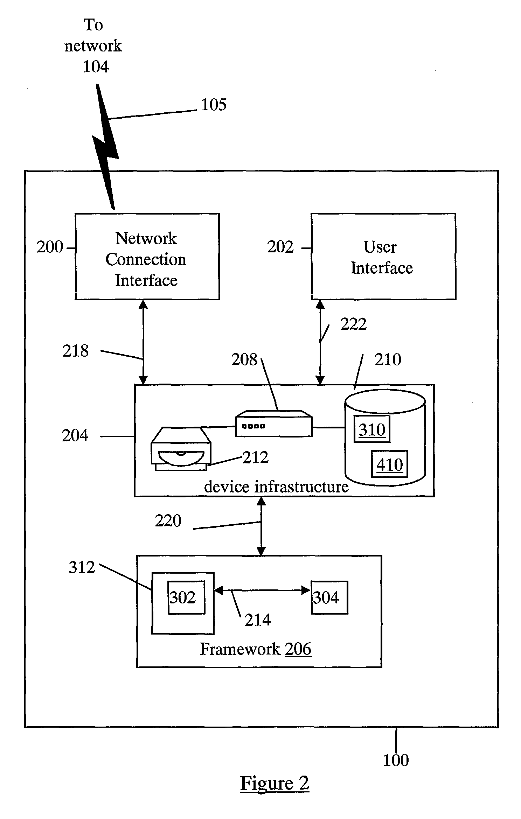

Referring again to Figure 1, the devices 100 can transmit and receive requests/response messages 105, respectively, when in communication with the web services 106. The devices 100 can operate as web clients of the web services 106 by using the requests/response messages 105 in the form of message header information and associated data content, for example requesting and receiving product pricing and availability from an on-line merchant. The web service 106 is an example of a system with which client application programs 302 (see Figure 2) on the communication devices 100 interact via the network 104 in order to provide utility to users of the communication devices 100.

Referring again to Figure 1, for satisfying the appropriate requests/response messages 105, the web service 106 can communicate with an application server 110 through various protocols (such as but not limited to HTTP and component API) for exposing relevant business logic (methods) to client application programs 302 (see Figure 2) once provisioned on the devices 100. The application server 110 can also contain the web service 106 software, such that the web service 106 can be considered a subset of the application server 110. The application programs 302 of the device 100 can use the business logic of the application server 110 similarly to calling a method on an object (or a function). It is recognized that the client application program 302 can be downloaded/uploaded in relation to the application server 110, through the messages 105 via the network 104, directly to the devices 100. It is further recognized that the devices 100 can communicate with one or more web services 106 and associated application servers 110 via the networks 104.

### Server Environment

Referring to Figure 1, the web service 106 provides the information messages 105 which are used by the client application programs 302 (see Figure 2) on the devices 100. Alternatively, or in addition, the web service 106 may receive and use the information messages 105 provided by the client application programs 302 executed on the devices 100, or perform tasks on behalf of client application programs 302 executed on the devices 100. The web service 106 can be defined as a software service, which can implement an interface such as expressed using Web Services Description Language (WSDL) registered in Universal Discovery Description and Integration (UDDI) in a web services registry, and can communicate through messages 105 with client devices 100 by being exposed over the network 104 through an appropriate protocol such as the Simple Object Access Protocol (SOAP). Alternatively, the web service 106 may use other known communication protocols, message 105 formats, and the interface may be expressed in other web services languages than described above.

### Client Environment

Referring to Figure 2, the component applications 302 are transmitted via the network 104 and loaded into a memory module 210 of a device infrastructure 204 of the device 100. Alternatively, the component applications 302 may be loaded via a serial connection, a USB connections, or a short-range wireless communication system such as IR, 802.11(x) BluetoothTM (not shown). Once loaded onto the device 100, the component applications 302 can be executed by an execution environment 312 on the device 100, which can convert the applications 302 into native code if required, via a processor 208 in the device infrastructure 204. Alternatively, the applications 302 may be interpreted by another software module (not shown) or operating system on the device 100. In any event, the component applications 302 are run in the execution environment 312 provided by the device 100. The execution environment 312 can be provided by an intelligent software framework 206 that can also provide a set of basic services to manage and execute typical application 302 behaviour (e.g. persistence, messaging, screen navigation and display).

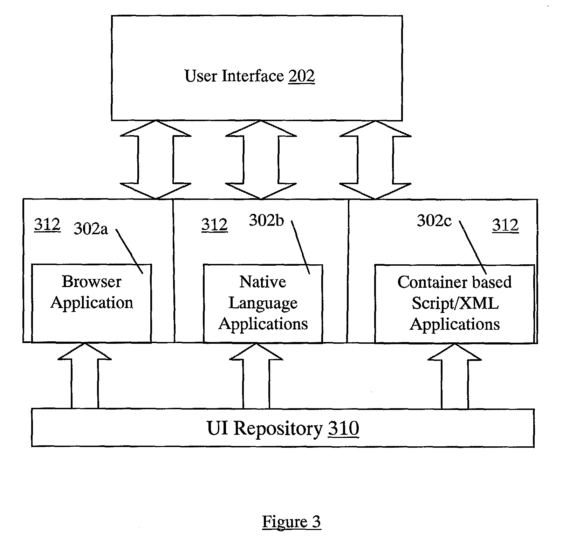

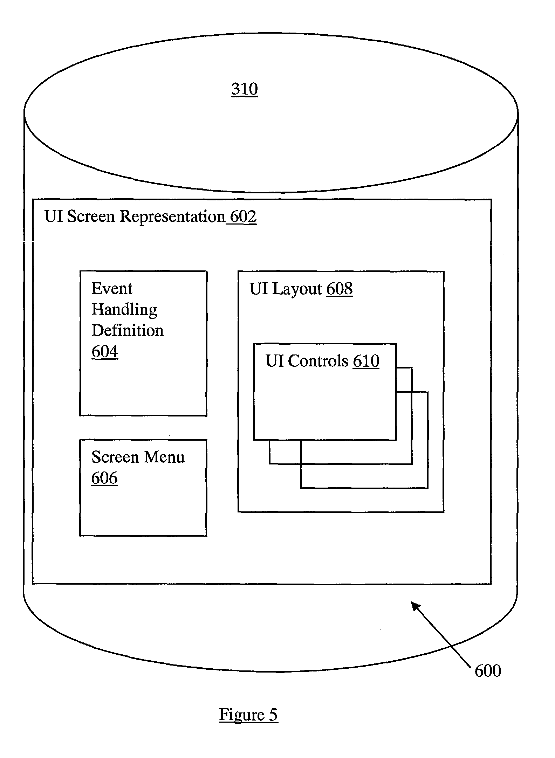

Referring to Figure 3, the applications 302 can be such as but not limited to browser applications 302a, native language applications 302b, and/or container based script/structured definition language (e.g. XML) applications 302c, which are executed in a suitable execution environment 312. Each of the applications 302a,b,c provisioned on the device 100 has access to a user interface (UI) Repository 310, such that the UI Repository 310 contains UI definitions 600 (see Figure 5) described in a structured definition language (such as but not limited to XML). Every application 302a,b,c has it's own entry in the UI Repository 310, where the UI definitions 600 for this application 302a,b,c are stored. The UI definitions 600 are used by the applications 302a,b,c to provide output to the user interface 202 for interaction with the device 100 user. The Browser Applications 302a can be applications 302 that execute on the device 100 within the browser execution environment 312. Browser applications 302a can be characterized by a small footprint on the device 100 since most of the application logic is located on an application server (i.e. web service 106 - see Figure 1). The browser environment 312 provides a "sandbox" security environment for executing the browser applications 302a and thus can ensure appropriate access control. Native Language Applications 302b are applications 302 implemented in a specific language, which is native for native environment 312 of the device 100 - e.g. C++, Java, etc. The native applications 302b have access to extended set of device 100 features, but they can be rarely portable between different device 100 environments 312 (e.g. platforms). Container based Script/XML Applications 302c are applications 302 defined using a scripting language and metadata defined in XML or another structured definition language. These applications 302c can be executed within a container based runtime environment 312. The applications 302a,b,c will hereafter be referred to as the applications 302, for the sake of simplicity.

Referring again to Figure 1, the client runtime environment provided by the devices 100 can be configured to make the devices 100 operate as web clients of the web services 106. It is recognized that the client runtime environment can also make the devices 100 clients of any other generic services offered over the network 104, such as but not limited to generic schema-defined services. Further, specific functions of the framework 206 can include such as but not limited to support for language, coordinating memory allocation, networking, management of data during I/O operations, coordinating graphics on an output device of the devices 100 and providing access to core object oriented classes and supporting files/libraries. Examples of the runtime environments implemented by the devices 100 can include such as but not limited to Common Language Runtime (CLR) by Microsoft and Java Runtime Environment (JRE) by Sun Microsystems.

### Communication Device

Referring to again to Figure 2, the devices 100 are devices such as but not limited to mobile telephones, PDAs, two-way pagers or dual-mode communication devices. The devices 100 include a network connection interface 200, such as a wireless transceiver or a wired network interface card or a modem, coupled via connection 218 to a device infrastructure 204. The connection interface 200 is connectable during operation of the devices 100 to the network 104, such as to the wireless network 102 by wireless links (e.g., RF, IR, etc.), which enables the devices 100 to communicate with each other and with external systems (such as the web service 106) via the network 104 and to coordinate the requests/response messages 105 between the client application programs 302 and the service 106 (see Figure 1). The network 104 supports the transmission of data in the requests/response messages 105 between devices and external systems, which are connected to the network 104. The network 104 may also support voice communication for telephone calls between the devices 100 and devices which are external to the network 104. A wireless data transmission protocol can be used by the wireless network 102, such as but not limited to DataTAC, GPRS or CDMA.

Referring again to Figure 2, the devices 100 also have the user interface 202, coupled to the device infrastructure 204 by connection 222, to interact with a user (not shown). The user interface 202 includes one or more user input devices such as but not limited to a QWERTY keyboard, a keypad, a trackwheel, a stylus, a mouse, a microphone and the user output device such as an LCD screen display and/or a speaker. If the screen is touch sensitive, then the display can also be used as the user input device as controlled by the device infrastructure 204. The user interface 202 is employed by the user of the device 100 to coordinate the requests/response message messages 105 over the system 10 (see Figure 1) as employed by client application programs 302.

Referring again to Figure 2, operation of the device 100 is enabled by the device infrastructure 204. The device infrastructure 204 includes the computer processor 208 and the associated memory module 210. The computer processor 208 manipulates the operation of the network interface 200, the user interface 202 and the framework 206 of the communication device 100 by executing related instructions, which are provided by an operating system and client application programs 302 located in the memory module 210. The memory module can further include the UI repository 310 and a themes and branding repository 410, as further described below. It is recognized that the device infrastructure 204 can include a computer readable storage medium 212 coupled to the processor 208 for providing instructions to the processor and/or to load/update client application programs 302 in the memory module 210. The computer readable medium 212 can include hardware and/or software such as, by way of example only, magnetic disks, magnetic tape, optically readable medium such as CD/DVD ROMS, and memory cards. In each case, the computer readable medium 212 may take the form of a small disk, floppy diskette, cassette, hard disk drive, solid state memory card, or RAM provided in the memory module 210. It should be noted that the above listed example computer readable mediums 212 can be used either alone or in combination.

### Framework of Device

Referring to Figures 1 and 2, the framework 206 of the device 100 is coupled to the device infrastructure 204 by the connection 220. The framework 206 of the device 100 has the execution environment 312 that is preferably capable of generating, hosting and executing the client application programs 302. The framework 206 can be thought of as an intelligent software framework 206 that can provide a set of basic services 304 to manage and execute typical application 302 behavior, such as but not limited to persistence, provisioning, messaging, screen navigation and user interface/screen services. Therefore, framework 206 provides the appropriate execution environment(s) for the client application program(s) 302 and is the interface to the device 100 functionality of the processor 208 and associated operating system of the device infrastructure 204. The framework 206 provides the execution environment 312 by preferably supplying a controlled, secure and stable environment on the device 100, in which the application programs 302 execute.

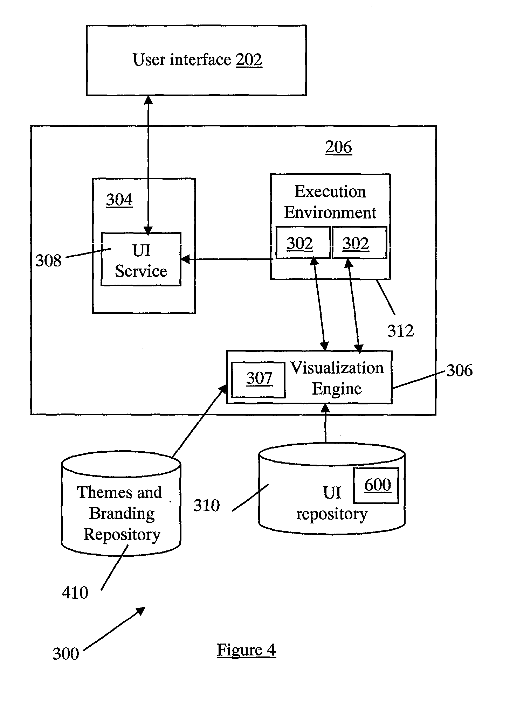

Referring again to Figure 2, the framework 206 can provide services 304 (a standard set of generic services) to the client application programs 302, in the event certain services are not included as part of the application 302 or received as separate components (not shown) as part of the application program 302. The application program 302 has communications 214 with the services 304, as needed. It is recognized that a portion of the operating system of the device infrastructure 204 (see Figure 1) can represent the any of the services 304. It is recognized that the services 304 of the communication device 100 can provide functionality to the application programs 302, which can include the services described above. Further, the services 304 can be integrated with the application 302 rather than provided as a separate framework. In any event, the component application programs 302 can have access to the functionality of the communication device 100 through integrated and/or separate services 304, as further described below. The services 304 include a UI service 308 (see Figure 4) which manages the representation of the application programs 302 as they are output on the output device of the user interface 202, as provided by a visualization engine 306 (see Figure 4). The provisioning service of the services 304 can manage the provisioning of the software applications 302 on the communication device 100. The persistence service of the services 304 can allow the application programs 302 to store data in the memory module 210, as well as access the UI repository 310 and the themes/branding repository 410.

### UI System for generating UI screen representations

Referring to Figure 4, a system 300 for visualization of UI definitions includes five basic modules, namely:
■ the Themes and Branding Repository 410;
■ the UI Repository 310;
■ the Visualization Engine 306;
■ the Execution Environments 312; and
■ the UI Service 308.

The UI Service 308 can be defined as a service 304 that is responsible for rendering UI controls of the user interface 202 and intercepting user input therefrom. The UI service 308 is typically specific for different device 100 platforms (i.e. native). The Execution Environments 312 can be defined as environment where all corresponding applications 302 are being executed. In some implementations this could be a java virtual machine, a component based framework, or simply the environment for running the device's native applications. The Visualization Engine 306 can be defined as an engine that parses UI XML definitions 600 stored in the UI Repository 310 and interprets them, as requested by the applications 302 executing in the environment 312. The UI definitions 600 provide for functional characteristics of the screen elements displayed on the user interface 202. The Visualization Engine 306 builds a native screen model 307 of a UI screen representation 602 (see Figure 5) for the user interface 202 that the UI Service 308 can then render to the user on behalf of the application 302 concerned. The UI Repository 310 can be defined as a repository containing UI definitions 600 (see Figure 5) for all applications 302 on the device 100. The Themes and Branding Repository 410 can be defined as a Repository of rendering information and rules for the UI definitions 600, specific for the current theme as preferably specified (at least in part) by the user of the device 100 and branding as selected preferably by the carrier for the device 100. Examples of themes can include background themes such as nature and technology flavours. Branding examples can include colour, placement, and logo details. This information and rendering rules from the Themes and Branding Repository 410 affects how the Visualization Engine 306 generates the UI screen representations 602 via screen models 307 for selected UI definitions 600 from the UI Repository 310. The rendering information and rules of the repository 410 provides for appearance characteristics of the screen elements displayed on the user interface 202.

### UI Definitions 600

The UI definitions 600 in the repository 310 are defined in XML or any other structured definition language and parsed by the visualization engine 306 during the provisioning phase and/or execution phase of the applications 302 (see Figure 4). The definitions 600 provide for functional characteristics of the screen elements displayed on the user interface 202, and can include items such as but not limited to screen layout, controls within the screen, control layout, event handling and various visualization attributes. Referring to Figure 5, the Definitions 600 include a UI Screen representation 602 which can be defined as a set of UI elements defining the user interface 202 (see Figure 2), presented to the user at a given moment. The UI Screen representation 602 may have different attributes, for example such as but not limited to: Logical name; Caption; Full screen or dialog mode; Foreground and background color; and Default font. The definitions 600 can also have an Event Handling Definition 604, which can be defined as a screen element that specifies how events from the user should be processed by the application 302, while the UI Screen representation 602 is active on the user interface 202. The definition 604 includes a list of events that the application 302 is interested in processing. These events may trigger a message to be sent to the application's 302 message handler (for example) or call a method with a specific naming convention. For container based Script/XML applications 302, the event handling definition may specify a script block to be executed or navigation to another screen of the interface 202. The definitions 600 also include a Screen Menu 606, which can be defined as a screen element that specifies a set of menu items accessible, while the screen representation 602 is active on the user interface 202. The menu items get listed in a menu and have associated action. The menu item action is a UI event that is used by the event handling definition. The definitions 600 also include a UI Layout 608, which defines the order and the positioning of UI controls 610 on the screen representation 602. The UI Layout 608 affects the UI controls 610 that it contains. The definitions 600 also include UI Controls 610 that can be defined as user interface elements that are used for building the screen representation 602. Common UI controls 610 are such as but not limited to: edit boxes; buttons; choice controls; image controls; scroll bars; and static text.

### Sharing UI definitions between applications

Referring to Figures 4 and 5, the UI definitions 600 can be shared between different applications 302 of the execution environment 312. This means that one application 302 can instantiate the screen representation 602 from the UI definition 600 stored in the UI Repository 310 entry of another application 302. This can help to save development effort, to achieve consistent "look and feel" between applications 302, and to provide easier maintenance.

One application 302 can instantiate the screen representation 602 out of the UI definition 600, belonging to another application 302, by referring the UI definition 600 prefixed by the application 302 name of the application 302 that owns the definition 600. For example, a single slash can be used as a delimiter between the name of the application 302 and the name of the referenced screen representation 602 generated by the definition 600. For example if application "A" needs to refer the screen representation 602 "OrderStatus" defined in the UI Repository 310 entry of application "B", the screen representation 602 should be referenced in the application code by "B\OrderStatus" to link to the definition 600 for generating the "OrderStatus" screen representation 602. In this way different applications 302 can share and execute UI definitions 600. It is recognised that the active application 302 can be responsible for handling any user events for the screen representation 602, constructed from the shared UI definition 600. In the above example application "A" could still provide the event handling that is required for the "OrderStatus" screen representation 602 as implemented by application "B".

The Visualization Engine 306 may support and implement a set of predefined global UI definitions 600 that can be reused by all applications 302 on the device 100. Examples of commonly used global UI definitions 600 are such as but not limited to:
1) Dialogs:
   URL entry dialogs
   Login dialogs
   Confirmation dialogs
   Search dialog
   etc.;
2) Styles, Themes; and
3) Common layouts, controls, animations, etc.

Depending on the area that the wireless device targets, the set of frequently used UI definitions 600 may fluctuate. For example for an email-centric device 100 a form for composing a new email would be a frequently used UI definition 600 and therefore suitable for inclusion in the global set of UI definitions 600.

### Platform independence

Referring to Figure 4, the system 300 is platform independent since the application's user interface 202 is defined in a platform independent manner. The Visualization Engine 306 is the module responsible for building a platform dependent screen model out of every UI definition 600. In order to reuse the UI definitions 600 on a different platform, the Visualization Engine 306 may be provided specificly for the target platform. It is recognised that the Visualization Engine 306 may be adapted to accommodate two or more device 100 platforms, as desired.

### Themes and branding

Referring to Figures 4 and 5, the system 300 and related methods can allow for seamless branding of all applications 302 on the device 100. Devices 100, such as wireless, are often subject to branding for a specific provider - either a wireless carrier or another provider of wireless services. By branding the device 100 the wireless provider can associate a set of offered features with a provider specific "look and feel" of the user interface 202. By branding their products, providers also try to create the user interface 202 that is more appealing to the user compared to what competitors have. The system 300 and related methods detach the branding information in the repository 410 from the UI definitions 600. The branding information can be created separately from the application development and can be customized for different providers. Since the branding information is taken into consideration on the level of the Visualization Engine 306, applying a specific branding profile affects all applications 302 on the wireless device 100. Any applications 302 installed in addition would also take into account the branding information on the device 100.

Another feature of the device 100 is the ability for the user to customize the "look and feel" of the user interface 202 according to specific personal preferences. This feature is imposed by the fact that, unlike desktop computers 100, wireless devices 100 can be perceived to be more personal. Wireless devices 100 are carried by users and are rarely shared between several users.
Using the same approach as branding, the system 300 and related methods provide a mechanism for customizing the user interface 202 of all applications 302 installed on the device 100 by supporting UI themes. The theme can be defined as a collection of customization settings. Multiple themes may be stored in the Repository 410, and applied at the user's request. The rules and information of the repository 410 provide for appearance characteristics of the screen elements displayed on the user interface 202, such as but not limited to Themes and layouts tailored for example for different times of the day, different days of the week, or different moods and visual preferences of the user.

### Operation for processing UI XML Repositories

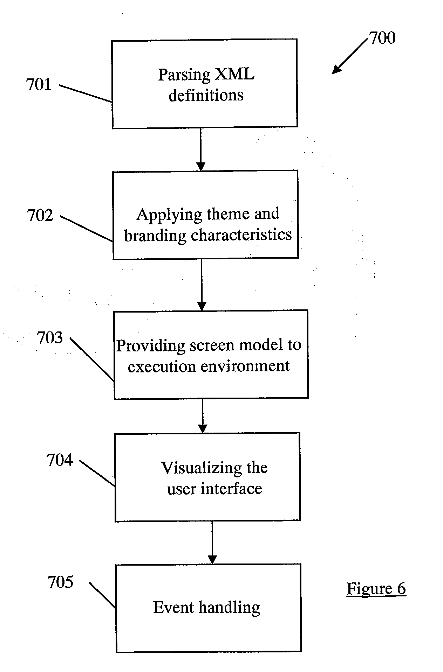

Referring to Figures 4, 5, and 6, operation 700 is described below.

### Step 701: Parsing the XML definitions

Upon application 302 start, the Visualization Engine 306 retrieves the application's UI definitions 600 from the UI Repository 310. When a request for screen activation is made, the Visualization Engine 306 finds the XML UI definition 600 of the screen and parses it. If a reference to the UI definition belongs to another application 302, the Visualization Engine 306 retrieves the requested definition 600 from the UI Repository 310. For every item in the UI definition 600, a corresponding platform specific UI element is created and added to the native model 307 of the screen. For example when the definition 600 of an edit control is encountered the platform specific class that implements the edit box is instantiated and added the model 307 of the screen. The native screen model 307 is platform specific and provides valid rendering of the UI definition 600 on the screen. Additional UI elements may be added to the model 307 in order to improve the user experience on a specific platform. It is recognised that the screen model 307 could also be generated as a platform independent model and then translated to the device 100 platform as required.

### Step 702: Applying theme and branding characteristics

During building of the screen model 307, the Visualization Engine 306 uses the information/rule set available in the Themes and Branding Repository 410 to give the UI elements a customized "look and feel". The Themes and Branding Repository 410 contains rendering information for all UI elements that require custom appearance.

### Step 703: Providing screen model 307 to the execution environment 312

Once the screen model 307 has been built the Visualization Engine 306 passes it over to the Execution Environment 312. Through the Execution Environment 312 the screen model 307 is made available to the requesting application 302 for additional customizations, if applicable, and generating the dynamic screen representation 602 for the user interface 202. This interaction with the screen representation 602 by the application 302 can include population of current values representing current display conditions on the user interface 202. Since the application 302 could freely manipulate the screen model 307, the system 300 and operation 700 can allow for building of rich and dynamic screen representations 602. It is also recognized that the visualization engine could be responsible for whole or in part for populating the screen representation 602 with current screen values.

### Step 704: Visualizing the user interface

At this stage the application 302 submits the screen model 307 to the UI Service 308. The UI Service 308 renders the UI elements in the model 307 and registers the application 302 for any event handling.

### Step 705: Event handling

Any user events on the interface 202 are propagated by the UI Service 308 back to the application 302 as an input to the application's logic. The application 302 should process the event and return the control back to the UI Service 308. Processing the event may involve navigating to a new screen or sending a visual feedback to the user. This processing may involve retrieving a new UI definition 600 from the UI repository 310 and creating the appropriate new screen model 307, as described above, or could simply involve updating of the control on the current screen representation 602 on the user interface via the UI service 308.

### Sample UI Definition

Here is a sample UI definition 600 for the screen representation 602 that should prompt the user for username and password. Two navigation buttons 610 are defined in the UI definition 600- btnRegister and btnLogin. These buttons 610 can navigated to a new user registration screen or attempt to login the user entered, correspondingly.

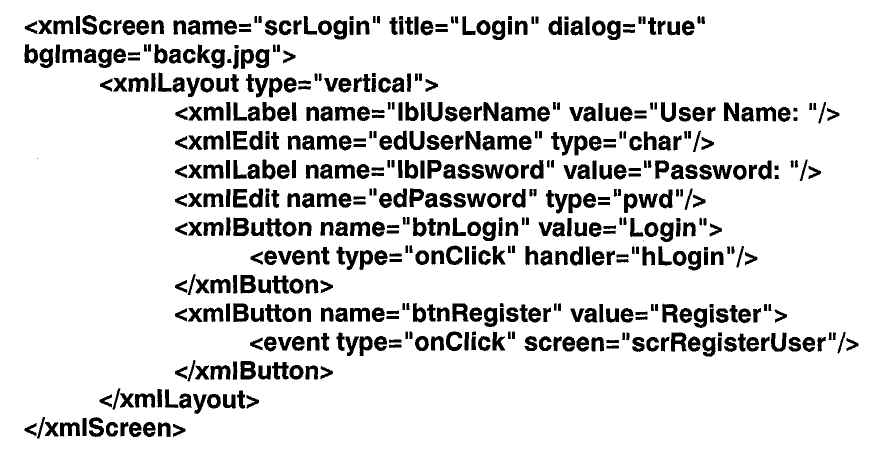

Here are explanations for the above screen representation 602:
■ **<xmlScreen** - defines a UI screen
   o **name="scrLogin"** - defines a logical name to the screen. The screen can be later referenced by its logical name
   o **title="Login"** - defines a title for the screen
   o **dialog="true" -** define the screen as a dialog as opposed to a full screen
   o **bglmage="backg"** - defines a background image for the screen
■ **<xmlLayout type="vertical">** - defines a vertical ordering of UI controls 610
■ **<xmlLabel name="lblUserName" value="User** Name: "/> - defines a static label on the screen with logical name "lblUserName" and value "User Name:"
■ **<xmlEdit name="edUserName" -** defines an edit box with logical name "edUserName"
   o **type="char"** - specifies that the edit box should accept any characters and numbers
■ **<xmlButton name="btnLogin" value="Login">** - defines a button with logical name "btnLogin" and label "Login"
   o <event **type="onClick" handler="hLogin"/>** - defines a handler for processing user events when the button is clicked. "hLogin" is name of the event handler
   o <event **type="onClick"** screen="scrRegisterUser"/> - defines a transition to another UI definition 600 with logical name "scrRegisterUser"

Although the disclosure herein has been drawn to one or more exemplary systems and methods, many variations will be apparent to those knowledgeable in the field, and such variations are within the scope of the application. For example, although XML is used in the examples provided, other languages and language variants may be used to define the applications 302.

## Claims

1. A method for generating a screen representation for display on a user interface (UI) of a device, the screen representation defined as a set of UI definitions expressed in a structured definition language configured for referencing by a plurality of applications when provisioned on the device, the method comprising the steps of:
requesting the screen representation by a first application of the plurality of applications;
retrieving from a memory the set of UI definitions corresponding to the screen representation;
parsing the structured definition language of the UI definitions to determine functional characteristics of the screen representation;
applying appearance characteristics to the functional characteristics to generate a screen model defining the screen representation; and
populating the screen model with current user interface conditions to generate the screen representation;
wherein the screen representation is configured for subsequent display to the user interface for interaction with a user via user events.

2. The method as claimed in claim 1, wherein the screen model is provided in a platform dependent or independent configuration as employed by an application execution environment of the device.

3. The method as claimed in claim 2, wherein the first application is any of a browser application configured for execution in a browser suitable form of the execution environment or a native application configured for execution in a native form of the execution environment or a component application based on a definition schema configured for execution in an application container form of the execution environment.

4. The method as claimed in claim 2 further comprising the step of retrieving the appearance characteristics from an appearance repository of the memory, the repository including appearance rendering rules of the appearance characteristics.

5. The method as claimed in claim 4, the rules comprising any of background themes, branding colour schemes, or branding placement.

6. The method as claimed in any of claims 2 further comprising the UI definitions being retrieved from a UI definition repository of the memory, the repository including the UI definitions for the functional characteristics.

7. The method as claimed in claim further comprising the step of including UI elements for attributes of the screen representation as parsed from the UI definitions.

8. The method as claimed in claim the attributes comprising any of: logical name; caption; or default font.

9. The method as claimed in claim 8 further comprising the step of including UI elements for event handling definitions specifying processing of the user events, the event handling definitions as parsed from the UI definitions.

10. The method as claimed in any of claims 6 to 9 further comprising the step of including UI elements for a screen menu for specifying a set of menu items as parsed from the UI definitions.

11. The method as claimed in any of claim further comprising the step of including UI elements for UI controls for accommodating the user events, the UI controls as parsed from the UI definitions.

12. The method as claimed in claim 1 further comprising the step of including UI elements for a UI layout for defining the order and position of the UI controls, the UI layout as parsed from the UI definitions.

13. The method as claimed in any of claims 2 further comprising the step of a UI service intercepting the user events and forwarding them to the first application, the application processing the user events and returning control to the UI service.

14. The method as claimed in claim 1 further comprising the step of updating the screen representation in response to the user events by having the corresponding screen model amended.

15. The method as claimed in any of claim 12, wherein the population of the screen model is performed by an entity selected from the group comprising: a visualization engine; the first application; and a UI service.

16. The method as claimed in anyof claims 2 to 15, wherein the first application instantiates the set of UI definitions referenced as an entry in the memory to a second application of the plurality of applications.

17. The method as claimed in claim 16, wherein each set of UI definitions in the memory is linked by a unique application identifier corresponding to one of the plurality of applications.

18. The method as claimed in claim 16 or claim 17, wherein the second application provides event handling of the user events coupled to the UI definitions.

19. A system for providing an execution environment of a device to generate a screen representation for display on a user interface (UI) of the device, the screen representation defined as a set of UI definitions expressed in a structured definition language configured for referencing by a plurality of applications when provisioned on the device, the system comprising:
a memory for storing a number of the UI definition sets for reference by the plurality of applications;
a visualization engine for accepting a screen representation request by a first application of the plurality of applications, and for parsing the structured definition language of a selected set of the UI definitions retrieved from memory to determine functional characteristics of the screen representation, the selected UI definitions corresponding to the requested screen representation;
a screen module coupled the visualization engine for applying appearance characteristics to the functional characteristics to generate a screen model defining the screen representation; and
a user interface service for rendering the screen model to provide the screen representation to the user interface;
wherein a user of the device interacts with the screen representation on the user interface.

20. The system as claimed in claim 19, wherein the screen model is provided in a platform dependent or independent configuration as employed by an application execution environment of the device.

21. The system as claimed in claim 20, wherein the first application is any of a browser application configured for execution in a browser suitable form of the execution environment or a native application configured for execution in a native form of the execution environment or a component application based on a definition schema configured for execution in an application container form of the execution environment.

22. The system as claimed in claim 20 or claim 21, wherein further comprises an appearance repository of the memory, the repository including appearance rendering rules of the appearance characteristics.

23. The system as claimed in claim 22, wherein the rules comprise any of background themes, branding colour schemes, or branding placement.

24. The system as claimed in any of claims 2 further comprising a UI definition repository of the memory, the repository including the UI definitions for the functional characteristics.

25. The system as claimed in claim 24, wherein UI elements are included for attributes of the screen representation as parsed from the UI definitions.

26. The system as claimed in claim 25, wherein the attributes comprise any of logical name; caption; or default font.

27. The system as claimed in claim 27, wherein UI elements are included for event handling definitions specifying processing of the user events, the event handling definitions as parsed from the UI definitions.

28. The system as claimed in any of claims 24 to 27, wherein UI elements are included for a screen menu for specifying a set of menu items as parsed from the UI definitions.

29. The system as claimed in any of claims 24 to 28, wherein UI elements are included for UI controls for accommodating the user events, the UI controls as parsed from the UI definitions.

30. The system as claimed in claim 29, wherein UI elements are included for a UI layout for defining the order and position if the UI controls, the UI layout as parsed from the UI definitions.

31. The system as claimed in any of claims 28 to 3 further comprising a UI service for intercepting the user events and forwarding them to the first application, the application processing the user events and returning control to the UI service.

32. The system as claimed in claim 31, wherein the screen representation is updated in response to the user events by having the corresponding screen model amended.

33. The system as claimed in any of claims 28 to 32, wherein the population of the screen model is performed by an entity comprising any of: a visualization engine; the first application; or a UI service.

34. The system as claimed in any of claims 20 to 33, wherein the first application instantiates the set of UI definitions referenced as an entry in the memory to a second application of the plurality of applications.

35. The system as claimed in claim 34, wherein each set of UI definitions in the memory is linked by a unique application identifier corresponding to one of the plurality of applications.

36. The system as claimed in claim 34 or claim 35, wherein the second application provides event handling of the user events coupled to the UI definitions.

37. A computer program product for generating a screen representation for display on a user interface (UI) of a device, the screen representation defined as a set of UI definitions expressed in a structured definition language configured for referencing by a plurality of applications when provisioned on the device, the computer program product comprising:
a computer readable medium;
a memory module stored on the computer readable medium for storing a number of the UI definition sets for reference by the plurality of applications;
a visualization engine stored on the computer readable medium for accepting a screen representation request by a first application of the plurality of applications, and for parsing the structured definition language of a selected set of the UI definitions retrieved from memory to determine functional characteristics of the screen representation, the selected UI definitions corresponding to the requested screen representation;
a screen module coupled the visualization engine module for applying appearance characteristics to the functional characteristics to generate a screen model defining the screen representation; and
a rendering module stored on the computer readable medium for rendering the screen model to provide the screen representation to the user interface;
wherein a user of the device interacts with the screen representation on the user interface.
